# EUROPEAN PATENT SPECIFICATION

(11) **EP 4 491 383 B1**
(45) Date of publication and mention of the grant of the patent: **08.04.2026**
(21) Application number: 23185175.9
(22) Date of filing: 13.07.2023
(51) Int. Cl.: B29C 70/54, B29D 99/00, B29C 70/86, B29L 31/08, B29C 31/00, B29C 65/78, B29C 65/00

(54) **POSITIONING SPAR CAPS IN BLADE MOULDS**
POSITIONIERUNG VON HOLMKAPPEN IN KLINGENFORMEN
POSITIONNEMENT DE SEMELLES DE LONGERON DANS DES MOULES À LAME

(43) Date of publication of application: 15.01.2025
(73) Proprietor: LM Wind Power A/S, 6000 Kolding (DK)
(72) Inventor: REMY, Adrien, 44200 Nantes (FR)
(74) Representative: Bardehle Pagenberg S.L.

(56) References cited:
- GB-A- 2 530 072

## Description

The present disclosure relates to tools for positioning spar caps in blade moulds, and methods for positioning spar caps in blade moulds.

### BACKGROUND

Modern wind turbines are commonly used to supply electricity to the electrical grid. Wind turbines of this kind generally comprise a rotor with a rotor hub and a plurality of wind turbine blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades are generally made from fiber-reinforced polymers or plastics (FRP's), which are composite materials comprising a polymer matrix and reinforced with fibers. The fibers are usually glass or carbon and provide longitudinal stiffness and strength.

Wind turbine blades are commonly manufactured by joining two blade shell parts made from fiber-reinforced polymers, e.g. glass or carbon fiber reinforced polymers. These blade shell parts may be molded using a resin infusion technology or a prepreg technology. In resin infusion technology, fibers are placed in a blade mould and then, the resin is injected into the mould cavity under pressure. This resin fills the volume between the cavity, and then, the resin is cured or hardened. Examples of resin infusion technology may be Resin Transfer Molding (RTM) or Vacuum Assisted Resin Transfer Molding (VARTM). In VARTM, the resin is injected under a vacuum or pressure lower than atmospheric.

A load-carrying structure may be arranged between the pressure side blade shell part and the suction side blade shell part. The load-carrying structure may comprise a reinforcing structure joined to opposing spar caps of the respective blade shell part. The spar caps may be embedded within the composite laminate materials of the blade shell parts or laminated to an inner surface of the blade shell. The spar caps are used to receive the reinforcing structure, e.g. a pair of opposing flanges, and to structurally reinforce the wind turbine blade. The spar caps provided in the blade shell parts typically increase the stiffness, buckling resistance, and strength of the wind turbine blade. The spar caps extend along a longitudinal length of the wind turbine blade.

Spar caps may be constructed of various materials, including glass fiber laminate composites and carbon fiber laminate composites.

The spar caps are usually manufactured in a spar cap mould, and then, are arranged on the fibers placed in the blade mould. A crane is generally used for lifting and positioning the pre-fabricated spar caps on the blade mould.

The spar cap must be placed in the blade mould at a specific location along both the lengthwise direction and the chordwise direction. Furthermore, the spar caps must be positioned within predetermined tolerances to guarantee the blade shell's mechanical properties. However, as the spar caps are long structures, the spar caps may be easily misaligned relative to the specific location. This may provide a manufacturing process with poor repeatability. A spar cap misaligned relative to the blade shell part could cause the blade shell to be disregarded since the mechanical properties of the blade shell part may be negatively affected. This may cause material wastage.

One crane operator and several workers distributed along the lengthwise direction of the blade mould may be required to accurately position the spar cap at the specific location. Accordingly, accurately positioning the spar cap may be complex and labor-intensive. The workers may guide the spar cap towards the specific location. This may involve the workers being exposed to a suspended load. Working under a suspended load puts the safety of the workers at risk.

GB2530072A discloses a kit of materials for arranging in a wind turbine blade mould to form pad of a wind turbine blade shell.

The present disclosure provides examples of tools and methods that at least partially resolve some of the aforementioned disadvantages.

### SUMMARY

In a first aspect, a tool for positioning a spar cap in a blade mould is provided. The tool comprises a structure comprising a central portion, a first support, and a second support configured to be positioned at respectively both sides of the spar cap with respect to a lengthwise direction. The central portion is arranged between the first support and the second support.

The tool further comprises a connector arranged at the central portion, wherein the connector is configured to be releasably attached to a surface of the spar cap, and a reference arm configured to engage a first spar cap reference for positioning the connector relative to the surface of the spar cap.

According to this aspect, the connector may be releasably attached to the spar cap while the reference arm engages the first spar cap reference. Therefore, the connector may be accurately positioned with respect to the spar cap in a predetermined position in the lengthwise direction and/or a chordwise direction. This may help to position the spar cap on the blade mould within predetermined tolerances in the lengthwise direction and/or chordwise direction at a specific location.

As the spar cap may be positioned in the blade mould within predetermined tolerances, the mechanical properties of the manufactured blade shells may be guaranteed. Furthermore, the number of disregarded blade shells may be reduced. As a consequence, material wastage may be avoided or at least reduced.

Moreover, since the connector may be releasably attached to the spar caps at the same predetermined position time after time, the repeatability of the manufacturing process may be enhanced.

Furthermore, the first spar cap reference is used for accurately positioning and attaching the connector to the spar cap. This may allow for accurately positioning the connector with respect to the spar cap regardless of the place where the spar cap is stored. Accordingly, it is not necessary to provide reference features in carriage tools storage trolleys or spar cap moulds. This may simplify the manufacturing process and the manufacturing tools.

In a further aspect, a method for positioning a spar cap in a blade mould using a tool for positioning a spar cap in a blade mould is provided. The method comprises moving the tool towards the spar cap to position a first support and a second support of the tool at respectively both sides of the spar cap.

The method further comprises engaging a reference arm of the tool and a first spar cap reference, and releasably attaching a connector of the tool to a surface of the spar cap.

In addition, the method comprises moving the tool towards the blade mould to position the first support and the second support at each side of the blade mould, and de-attaching the spar cap from the connector to arrange the spar cap in the blade mould.

Advantages derived from this aspect may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a blade root portion of a wind turbine blade according to one example of the present disclosure;
Figure 3 shows a cross-sectional view of a wind turbine blade according to one example of the present disclosure;
Figure 4 schematically shows a perspective view of a tool for positioning a spar cap in a blade mould according to one example of the present disclosure;
Figure 5 schematically represents a view from above of a blade mould comprising the spar cap and a tool for positioning the spar cap according to one example of the present disclosure;
Figure 6 schematically shows an elevation view of a tool for positioning a spar cap in a blade mould and guide members according to one example of the present disclosure;
Figures 7A - 7B schematically illustrate a first support and a second support respectively in an extended position and a retracted position according to an example of the present disclosure;
Figure 8 illustrates a perspective view of a tool for positioning a spar cap releasably attached to the spar cap according to one example of the present disclosure;
Figure 9 schematically represents an elevation view of the tool of Figure 8 in a blade mould according to one example of the present disclosure;
Figure 10 schematically represents a top view of a tool for positioning a spar cap according to one example of the present disclosure;
Figure 11 illustrates a side view of the tool for positioning a spar cap when positioned relative to a blade mould according to one example of the present disclosure; and
Figure 12 is a block diagram of a method for positioning a spar cap in a blade mould according to an example of the present disclosure.

### DETAILED DESCRIPTION OF EXAMPLES

In these figures, the same reference signs have been used to designate matching elements.

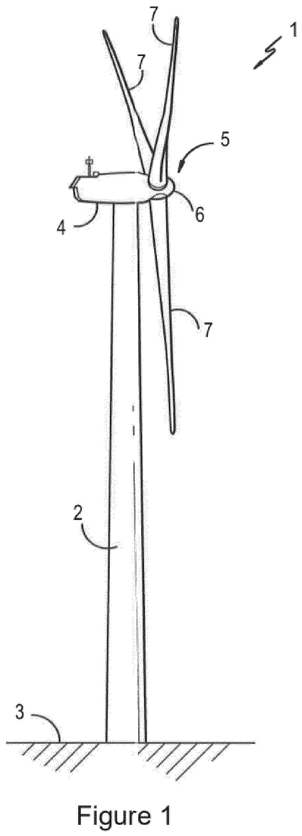

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in other examples, the rotor 5 may include more or less than three wind turbine blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 positioned within the nacelle 4 or forming part of the nacelle to permit electrical energy to be produced.

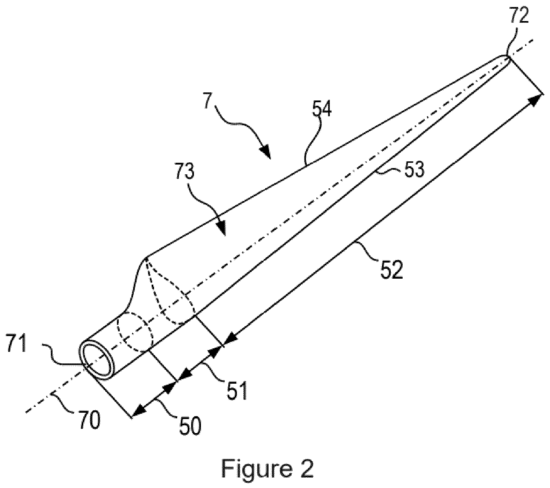

Figure 2 shows a perspective view of a blade root portion of a wind turbine blade 7 according to one example of the present disclosure. The wind turbine blade 7 extends in a longitudinal direction, spanwise direction, or lengthwise direction 37 from a blade root end 71 to a blade tip end 72. The wind turbine blade 7 comprises a blade root region or portion 50 closest to the rotor hub, a profiled or an airfoil portion 52 furthest away from the rotor hub and a transition portion 51 between the blade root portion 50 and the airfoil portion 52. The wind turbine blade 7 comprises a leading edge 53 facing the direction of rotation of the wind turbine blade 7 when mounted on the rotor hub, and a trailing edge 54 facing the opposite direction of the leading edge 53.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure. The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

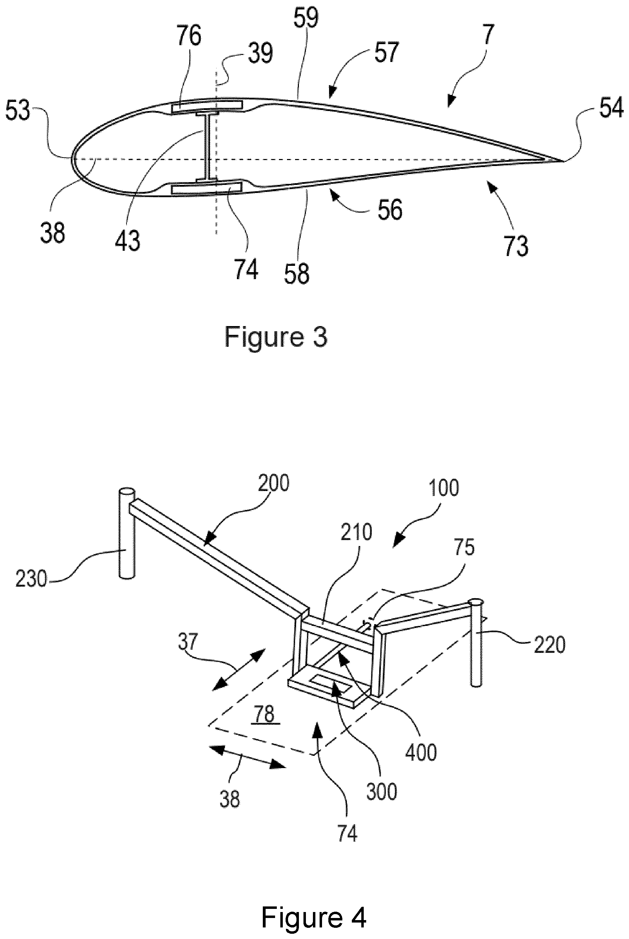

Figure 3 shows a cross-sectional view of the wind turbine blade according to one example of the present disclosure. A suction side 57 or downwind side, and a pressure side 56 or upwind side extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line or chordwise direction 38.

In this example, the blade shell comprises a lower side blade shell part 58 and an upper side blade shell part 59. The lower side blade shell part 58 may be a pressure side blade shell part. The upper side blade shell part 59 may be a suction side blade shell part. The lower side blade shell part 58 may be joined to the upper side blade shell part 59 along joining lines along the leading edge 53 and the trailing edge 54. Each of these blade shell parts 58, 59 may be manufactured in a mould and then joined together to define the entire blade shell of the wind turbine blade 7. A reinforcing structure is arranged between the lower side blade shell part 58 and the upper side blade shell part 59.

The wind turbine blade 7 comprises a blade structure that provides stiffness to the wind turbine blade. The blade structure of this example comprises the blade shell 73 and a load-carrying structure. In further examples, the blade structure may also comprise a plurality of structural ribs arranged along the length of the blade. In this example, the load-carrying structure comprises a shear web 43. The load-carrying structure of this figure also comprises a pressure side spar cap 74 arranged at the pressure side 56 and a suction side spar cap 76 at the suction side 57.

Although the examples of the present description are related to the pressure side spar cap 74 (spar cap 74 from now on), the expression spar cap may refer to both the pressure side spar cap and the suction side spar cap. The spar cap 74 is embedded between the outer and the inner layer of a blade shell part. In some examples, the shear web 43 could be a spar box with spar sides, such as a trailing edge spar side and a leading edge spar side.

Figure 4 schematically shows a perspective view of a tool 100 for positioning a spar cap 74 in a blade mould according to one example of the present disclosure. The tool 100 comprises a structure 200, a connector 300, and a reference arm 400. The spar cap 74 in Figure 4 may be provided on a storage trolley (not illustrated) or the like in a storage area. In Figure 4, the spar cap 74 has been illustrated in dotted lines for the sake of clarity.

The structure 200 comprises a central portion 210 arranged between a first support 220 and a second support 230. The first support 220 and the second support 230 are configured to be positioned at respectively both sides of the spar cap 74 with respect to the lengthwise direction 37. The central portion 210 may comprise a generally planar configuration. Therefore, structure 200 may be positioned substantially perpendicular to the length of the spar cap 74 when the first support 220 and the second support 230 are positioned at respectively both sides of the spar cap 74. The structure 200 of this example extends in a direction substantially parallel to the chordwise direction 38.

In some examples, the first support 220 may comprise a leading edge support. The second support 230 may comprise a trailing edge support.

The connector 300 is arranged at the central portion 210 and is configured to be releasably attached to a surface 78 of the spar cap 74, for instance, a spar cap upper surface. The connector 300 may be based on a technology that allows releasably attaching the surface 78, e.g., vacuum, adhesion, or the like.

The reference arm 400 is configured to engage a first spar cap reference 75 for positioning the connector 300 relative to the surface 78 of the spar cap 74. The reference arm 400 may engage the first spar cap reference 75. Then, the connector 300 may be attached to the surface 78 of the spar cap 74 at the predetermined position.

The reference arm 400 may be releasably attached to the rest of the tool 100. This may allow using the reference arm 400 to maintain the connector 300 at the predetermined position in the lengthwise direction of the spar cap during positioning operations of the spar cap, and remove the reference arm 400, for instance, when the spar cap 74 is already suitably located in the blade mould. In this example, the reference arm 400 extends or protrudes from the structure 200 and/or the connector 300 in a direction substantially parallel to the lengthwise direction 37. This way, the reference arm does not interfere with the connector 300.

In some examples, the first spar cap reference 75 may comprise an anchor disc of a lightning protection system of the wind turbine blade 7. The anchor disc may be a component of a lightning protection system of the wind turbine blade 7. The anchor disc may be used for connecting electrically conductive elements of the spar cap to a down conductor. The spar cap may comprise a plurality of anchor discs distributed along the spanwise direction. Electrical connectors may be connected to these anchor discs to electrically connect the spar cap, e.g carbon fibres of the spar cap, to the down conductor of the wind turbine blade 7. Each of these anchor discs is arranged at a specific position along the spanwise direction of the spar cap to ensure a proper connection to the remaining components of the lightning protection system.

In some examples, the first spar cap reference 75 may comprise the anchor disc of the spar cap closer to the tip end of the wind turbine blade. Each of the anchor discs is associated with a predetermined position along the length of the spar cap.

In other examples, the first spar cap reference 75 may comprise any other feature of the spar cap 74 such as bores, cavities, depressions, indentations and/or protuberances associated with a predetermined position along the lengthwise direction of the spar cap 74. The connector 300 may be attached to the spar cap 74 at any predetermined position along the length of the spar cap depending on the position of the first spar cap reference 75.

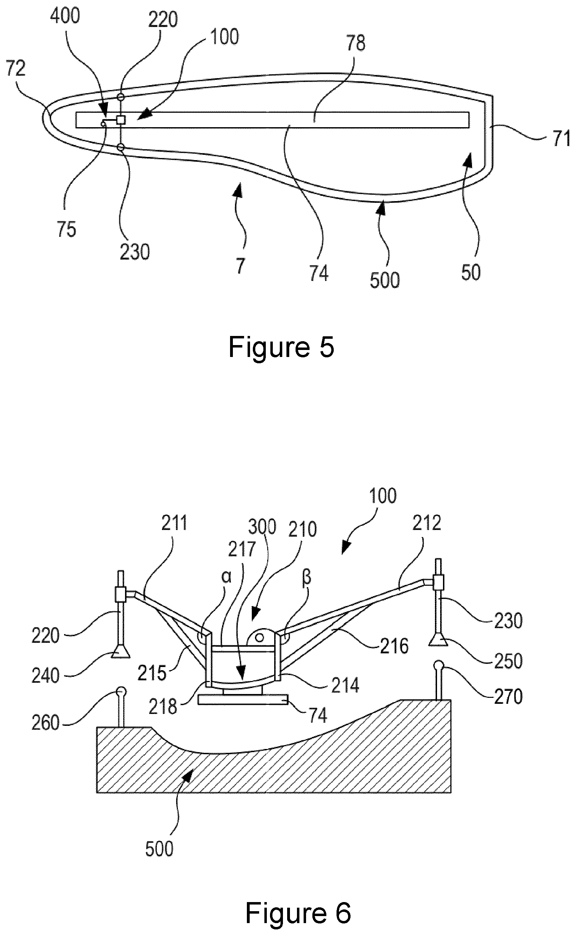

Figure 5 schematically represents a view from above of a blade shell part comprising the spar cap and a tool for positioning the spar cap according to one example of the present disclosure.

In this figure, the tool 100 is located above the blade mould 500. In the blade moulds of the examples disclosed herein, the inner layers of the blade shell parts have not been illustrated for clarity purposes.

In some examples, the blade mould 500 may comprise a blade shell mould.

In this example, the tool 100 is closer to the blade tip end 72 than the blade root end 71 of the wind turbine blade 7. The tool is located closer to the blade tip end 72, for example, in the third outermost portion (when seen from the blade root end 71) of the wind turbine blade 7 in a lengthwise direction. However, in some examples, the tool 100 may be located closer to the blade root end 71 than to the blade tip end 72.

The tool 100 may help to accurately locate the spar cap 74 in the blade mould 500. The connector 300 of the tool may be attached to a region of the spar cap close to the tip end 72, e.g. close to the anchor disc of a plurality of anchor discs of the spar cap closer to the tip end. Therefore, since the tool may be located closer to the blade tip end 72, a crane operator may control the lowering of the tool and the spar cap remotely from the blade root region or portion 50.

In this figure, the spar cap 74 is connected to the tool 100. The tool 100 and the attached spar cap 74 are moved from the position of Figure 4 to the position of Figure 5. The tool and the spar cap 74 may be lifted using a crane or any other suitable lifting device when they are moved. For example, the tool 100 supporting the spar cap 74 may be moved from a storage area to the blade mould with a crane.

The first support 220 and the second support 230 of this example are arranged at both sides of the blade mould 500. The first support 220 and the second support 230 may be positioned at a specific location along the lengthwise direction 37. The spar cap 74 may thus be located at the correct lengthwise location relative to the blade mould.

Figure 6 schematically shows an elevation view of a tool 100 for positioning a spar cap 74 in a blade mould and guiding members 260, 270 according to one example of the present disclosure. As above mentioned, the tool along with the spar cap may be lifted, e.g. from a storage area, and moved towards the blade mould 500.

In the tool 100 of this figure, the first support 220 and the second support 230 comprise a coupling portion 240, 250 configured to engage corresponding guiding members 260, 270 arranged at a trailing edge side and a leading edge side of the blade mould 500. The guiding members 260, 270 may form part of the blade mould 500 or may be separate from the blade mould 500. The guiding members 260, 270 are arranged at a specific location along the lengthwise direction.

The spar cap 74 is attached to the connector 300 arranged between the first and the second supports 220, 230. The first and second supports 220, 230 may be guided by the guiding members 260, 270 while the tool supporting the spar cap 74 is lowered towards the blade mould 500. Thus, the tool 100 may be accurately located with respect to the blade mould 500, reducing or even avoiding the exposure of the workers to a suspended load.

In some non-illustrated examples, the first support 220 and the second support 230 are void of coupling portions so the first and second supports may rest, for instance, on the factory floor.

One of the coupling portion 240, 250, and the corresponding guiding member 260, 270 may comprise a funnel, and the other one may comprise a spherical center pin to be received by the funnel. In the example of Figure 6, the coupling portion 240, 250 comprises the funnel, and the corresponding guiding member 260, 270 comprises a spherical center pin. Apart from the spherical center pin, the guiding members 260, 270 may comprise any suitably shaped part such as a prism, cylinder, cone, and so on.

Providing a funnel on the coupling portions 240, 250 of the supports 220, 230 and a spherical center pin on the corresponding guiding members 260, 270 enhances the guiding of the tool relative to the tool.

As can be seen in Figure 6, the central portion 210 comprises a leading edge beam 211 extending between the connector 300 and the first support 220, and a trailing edge beam 212 extending between the connector 300 and the second support 230. The central portion 210 comprises a tubular configuration and can be made of a metallic material or other materials. The leading edge beam 211 and the trailing edge beam 212 are respectively connected to an upper end of a leading edge column 218 and to an upper end of a trailing edge column 214. The leading edge and the trailing edge columns 218, 214 comprise a lower end connected at opposite sides of the connector 300. The leading edge and the trailing edge columns 218, 214 may be arranged substantially upright with respect to the floor of the facility. An interconnecting beam 217 may connect the leading edge column 218 and the trailing edge column 214.

The central portion 210 may further comprise a leading edge strut 215 extending between a central region of the leading edge beam 211 and a central region of the leading edge column 218. This leading edge strut 215 may increase the stiffness of the leading edge beam 211. Similarly, the central portion 210 may comprise a trailing edge strut 216 between the trailing edge beam 212 and the trailing edge column 214.

The leading edge beam 211 and the trailing edge beam 212 are diagonally arranged with respect to the respective leading edge and the trailing edge columns 218, 214. An angle α may be defined between the leading edge beam 211 and the leading edge column 218. Similarly, an angle β may be defined between the trailing edge beam 212 and the trailing edge column 214. Both angles α and β may be substantially the same or different from each other. In some examples, angles α and β may be greater than 90 degrees, so the spar cap 74 may be accurately arranged on the blade mould 500 despite the curve-shaped cross section of the blade mould 500.

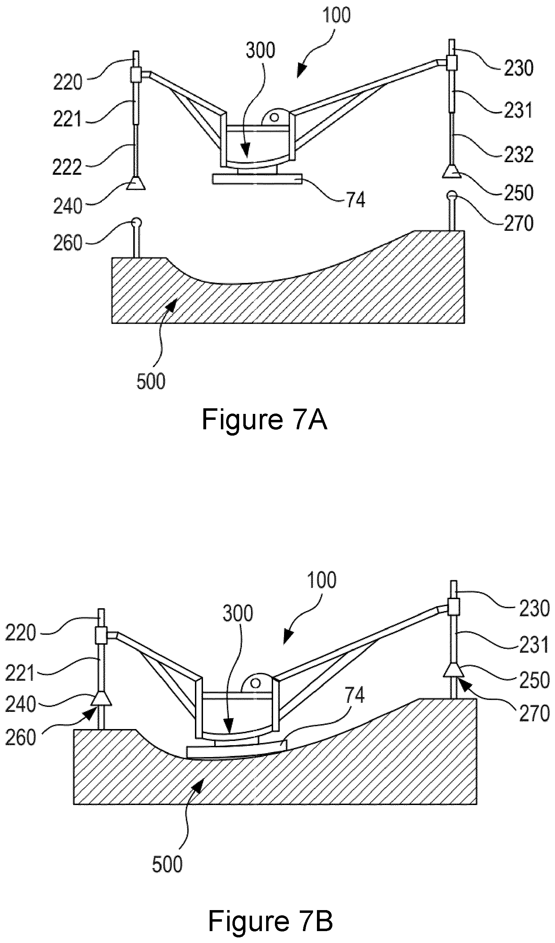

Figures 7A - 7B schematically illustrate a first support 220 and a second support 230 respectively in an extended position and a retracted position according to an example of the present disclosure. The examples of these figures have first and second supports 220, 230 telescopically configured, while the example of Figure 6 comprises first and second supports 220, 230 having a single bar.

In the example of this Figures 7A - 7B, the first support 220 and the second support 230 comprise an upper bar 221, 231 and a lower bar 222, 232 telescopically connected to each other. In this example, the lower bar 222, 232 is connected to the coupling portion 240, 250. The lower bar 222, 232 may axially extend from the upper bar 221, 231 in the extended position as illustrated in Figure 7A, and/or the lower bar 222, 232 may be received in the interior or exterior of the upper bar 221, 231 in the retracted position as illustrated in Figure 7B.

In the example of Figure 7A, the first and second supports 220, 230 are in the extended position and the spar cap is raised relative to the blade mould 500. This may occur when the tool 100 and the spar cap 74 are moved towards the blade mould 500. Then, the tool 100 and the spar cap 74 are lowered relative to the blade mould 500 until the coupling portion 240, 250 and guiding members 260, 270 are brought into contact therewith. Then the tool 100 and the spar cap 74 are further lowered while the first and second supports 220, 230 are progressively retracted until the spar cap 74 rests in the blade mould 500. In the example of Figure 7B, it can be seen that the first and second supports 220, 230 are in the retracted position and the spar cap is in contact with the blade mould 500. Therefore, a smooth lowering movement and location of the spar cap relative to the blade mould 500 may be achieved. A downwards movement of the tool 100 and the spar cap 74 may be precisely controlled.

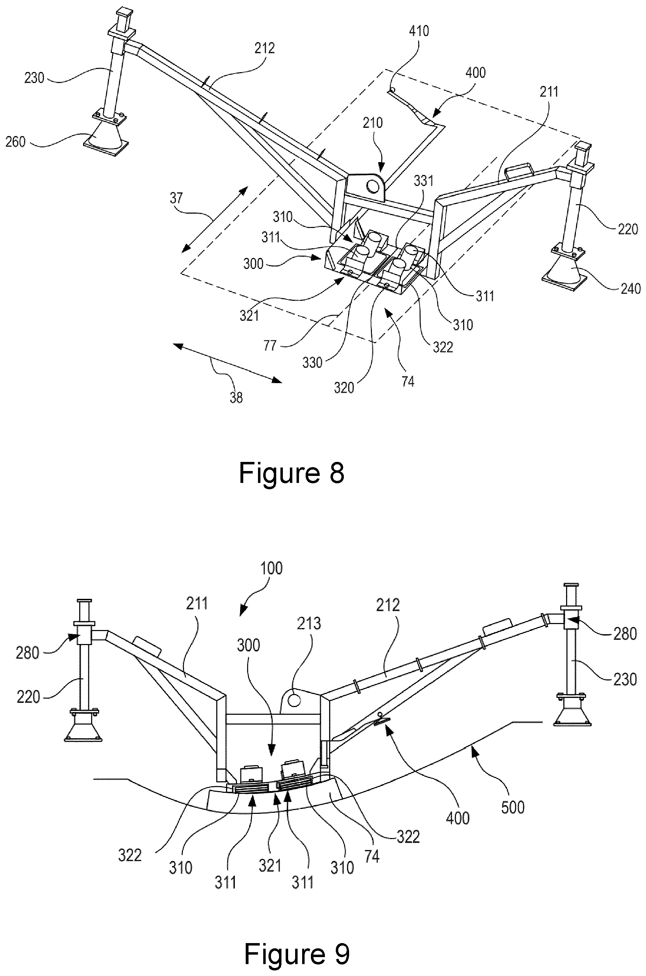

Figure 8 illustrates a perspective view of a tool for positioning a spar cap releasably attached to the spar cap according to one example of the present disclosure, and Figure 9 schematically represents an elevation view of the tool of Figure 8 in a blade mould according to one example of the present disclosure. In the examples of Figures 8 and 9, tool 100 is not connected to the first spar cap reference 75 for the sake of clarity. Furthermore, in Figure 8 the spar cap 74 has been illustrated in dotted lines for the sake of clarity.

The connector 300 may comprise one or more vacuum cups for releasably attaching the spar cap 74, and a bracket for holding the vacuum cup. The connector 300 of these figures comprises a pair of vacuum devices 310 and each of the vacuum devices 310 comprises two vacuum cups 311. The number of vacuum cups 311 and/or vacuum devices 310 of the connector 300 may vary depending on the case. The vacuum cups 311 are held by the bracket 320. In this example, the bracket comprises a plate and two lateral webs connected to the structure 200.

The operation of the vacuum devices 310 may be remotely controlled by e.g., the crane operator or a control unit (not shown), so as to remotely attach or de-attach the spar cap 74.

In these figures, each of the vacuum devices 310 is received in an opening 322 of the bracket 320. The connector 300 may comprise holding members to hold the vacuum device 310. The holding members may comprise screws or clamps to secure the vacuum device 310. The vacuum device 310 may thus be removable from bracket 320.

In the example of these figures, the bracket 320 comprises a lower portion 321 to face the spar cap 74, wherein the lower portion 321 may comprise a curved shape. This curved shape may be adapted to the curvature of the blade shell 7 in the chordwise direction 38.

The connector 300 may comprise a reference mark 330 to be aligned with a second spar cap reference 77. The second spar cap reference 77 may comprise a line or band along the lengthwise direction 37 of the spar cap 74. In some examples, the reference mark 330 may comprise two opposite marks along the lengthwise direction. These opposite marks may be aligned with the second spar cap reference 77 to ensure a correct position along the chordwise direction 38. In other examples, the reference mark 330 may comprise openings, windows, protrusions, or the like in the bracket 320 that are to be aligned with a line or points on the surface 78 of the spar cap 74.

One of the leading edge beam 211 and the trailing edge beam 212 may be longer than the other. Therefore, connector 300 may be closer to one of the first support 220 and the second support 230 than the other. This may allow locating the spar cap 74 at the specific location in the chordwise direction when the spar cap 74 is closer to the leading edge side or the trailing edge side.

One of the first support 220 and the second support 230 may reach a greater height than the other. This may allow locating the spar cap 74 at the specific location in the chordwise direction when the leading edge and the trailing edge of the wind turbine blade 7 have different heights from each other.

Tool 100 may comprise a handling portion 213 for attaching to a crane or the like.

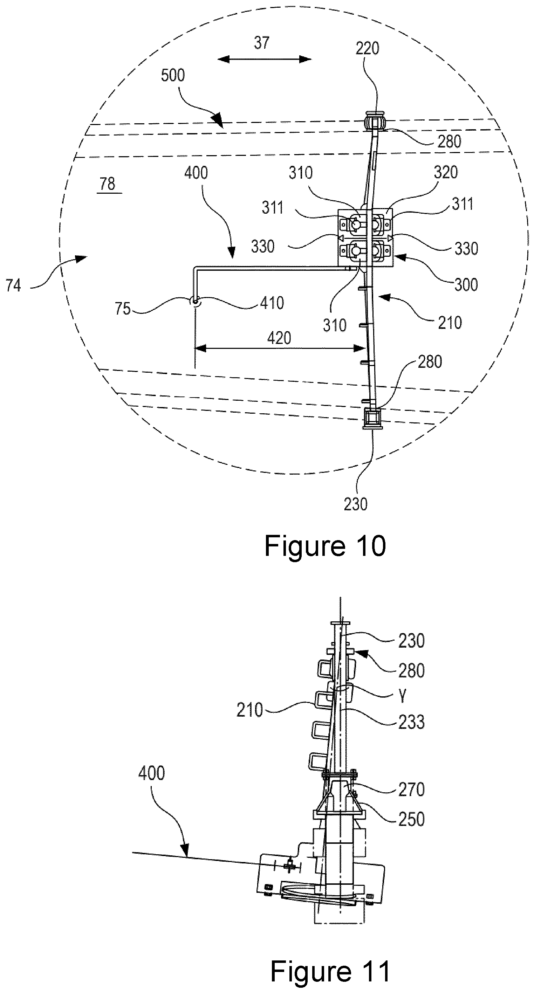

Figure 10 schematically represents a top view of a tool for positioning a spar cap according to one example of the present disclosure. In the example of Figure 10, the tool 100 is connected to the first spar cap reference 75.

The reference arm 400 may protrude from the central portion 210 in a direction substantially parallel to the lengthwise direction 37, in such a way that the connector 300 may be positioned at a predetermined distance 420 from the first spar cap reference 75 in the lengthwise direction 37 when the connector 300 is attached to the spar cap 74. The length of the reference arm 400 may be chosen depending on the sought predetermined distance 420.

The reference arm 400 may comprise a distal end 410 configured to be inserted in a hole of the first spar cap reference 75. In some examples, the distal end 410 may be configured to match, at least partially, the shape or configuration of the first spar cap reference 75.

The reference arm 400 of the example of Figure 10 has an L-shaped configuration when seen from above. However, this configuration may vary depending on the position of the first spar cap reference 75 and the sought position of the connector 300 relative to the spar cap 74.

In some examples, the length and/or the configuration of the reference arm 400 may be depending on a sought specific location of the connector 300 with respect to the blade mould 500. The specific location of the connector 300 with respect to the blade mould 500 may depend on the location of the guiding members 260, 270 in a lengthwise direction.

Figure 11 illustrates a side view of the tool 100 for positioning a spar cap when positioned relative to a blade mould 500 according to one example of the present disclosure. In the example of this Figure, the central portion 210 is inclined relative to the longitudinal axis 233 of the first support 220 and the second support 230 when seen from the trailing edge side and/or the leading edge side. The longitudinal axis 233 of the first and second supports 220, 230 may be substantially perpendicular to the floor of the facility, e.g. the first and second supports 220, 230 may be upright.

The central portion 210 may be connected with the first and second supports 220, 230 through flexible or rotatable joints 280 such that the central portion 210 can rotate about the joints 280 to be inclined. Therefore, an angle γ may be defined between the central portion 210 and the longitudinal axis of the first and second supports 220, 230 when seen from the trailing edge side and/or the leading edge side. In some examples, the angle γ may be between 2 and 10 degrees. Since the reference arm 400 may be releasably attached to the central portion 210 or the connector 300, the reference arm 400 may move with respect to the longitudinal axis of the first and second supports 220, 230 when seen from the trailing edge side and/or the leading edge side.

The relative inclination of the central portion 210 may help to correctly attach the connector 300 and the reference arm 400 to the spar cap regardless of the curvature or inclination of the blade shell part along the lengthwise direction. The latter may be particularly useful when the wind turbine blade 7 includes a pre-bend configuration.

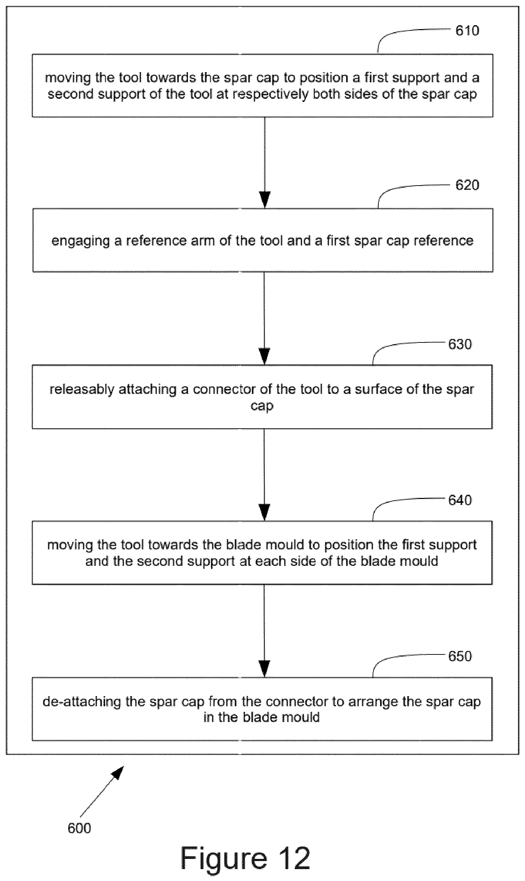

Figure 12 is a block diagram of a method 600 for positioning a spar cap in a blade mould according to an example of the present disclosure. A tool 100 for positioning a spar cap 74 in a blade mould 500 according to the examples herein may be used in the method 600.

At block 610, moving the tool 100 towards the spar cap 74 to position a first support 220 and a second support 230 of the tool at respectively both sides of the spar cap, is represented. A crane operator may move the tool 100 towards the spar cap 74 so that the first support 220 and the second support 230 are positioned at respectively both sides of the spar cap 74 with respect to the lengthwise direction.

The method 600 further comprises engaging the reference arm 400 of the tool and the first spar cap reference 75, as represented at block 620.

At block 630, releasably attaching a connector 300 of the tool to a surface 78 of the spar cap is represented. The connector 300 may be releasably attached to the upper surface of the spar cap in a predetermined position along the lengthwise direction. It is not necessary to connect the first support 220 and the second support 230 with any reference part of the storage trolley.

The method 600 further comprises moving the tool 100 towards the blade mould 500 to position the first support 220 and the second support 230 at each side of the blade mould 500, as represented at block 640. The first support 220 and the second support 230 are located on both sides with respect to the lengthwise direction. The tool 100 may be arranged in a specific location relative to the blade mould 500.

If the first support 220 and the second support 230 comprise lower bars 222, 232 and upper bars 221, 231 telescopically arranged, the first and second supports 220, 230 may be in the extended position when the tool 100 is lifted to be moved to the blade mould 500.

At block 650, de-attaching the spar cap 74 from the connector 300 to arrange the spar cap 74 in the blade mould 500 is represented.

In some examples, the first support 220 and the second support 230 may comprise a coupling portion 240, 250 configured to engage corresponding guiding members 260, 270 arranged at the trailing edge side and the leading edge side of the blade mould 500. In those examples, the method 600 comprises engaging i.e., bringing into contact, the coupling portion of first support and the second support with the corresponding guiding members. For instance, a funnel of any of the coupling portion 240, 250 may be brought into contact with the spherical center pin of the guiding member 260, 270.

The method 600 may further comprise lowering the connector after the coupling portion is engaged with the corresponding guiding members. Once the engagement or contact of the coupling portion 240, 250 and guiding members 260, 270 is achieved, the connector 300 and so the tool 100 may be lowered.

In some examples, one of the coupling portion and the corresponding guiding member may comprise a funnel and the other one comprises a spherical center pin to be received by the funnel. In those examples, the method 600 comprises inserting the spherical center pin into the funnel.

As the tool 100 is lowered, the lower bar 222, 232 is progressively received in the interior of the upper bar 221, 231 until the retracted position is reached.

The spar cap 74 may be positioned or rested on the blade mould 500 at a specific location after the tool 100, and so the connector 300, is lowered. The position of the spar cap 74 relative to the blade mould 500 is within the tolerances in the lengthwise direction and/or the chordwise direction. The spar cap 74 may be de-attached from the connector 300 to arrange the spar cap 74 on the blade mould 500.

According to some examples of method 600, the spar cap 74 may be positioned in a storage trolley when tool 100 is moving towards the spar cap 74. The spar cap 74 may be provided on a storage trolley (not illustrated) or the like in a storage area. The spar cap 74 may be manufactured in the same facility as the blade mould 500 or outside the facility.

The reference arm 400 may be engaged with the first spar cap reference 75 when the tool 100 moves towards the blade mould 500. The tool 100 and the spar cap 74 may be lifted by the crane. Therefore, a relative movement of the connector 300 and the spar cap 74 at least along the lengthwise direction may be avoided or at least reduced while the tool 100 and the spar cap 74 are moved and lifted.

The method 600 may further comprise inserting the distal end 410 of the reference arm 400 in a hole of the first spar cap reference 75.

The method 600 may comprise removing the reference arm 400 from the tool when the spar cap 74 is arranged on the blade mould 500. The reference arm 400 may be removed when the spar cap 74 is correctly located on the blade mould 500.

In some examples, the connector 300 may comprise a reference mark 330 to be aligned with a second spar cap reference 77. In those examples, the method 600 comprises aligning the reference mark 330 with the second spar cap reference 77.

In some examples, the central portion 210 may be connected with the first and second supports 220, 230 through flexible or rotatable joints 280 such that the central portion 210 can rotate about the joints 280 to be inclined. In those examples, the method 600 comprises rotating the central portion 210 about the joints 280 to incline the central portion 210 with respect to the longitudinal axis of the first and second supports 220, 230 when seen from the trailing edge side and/or the leading edge side. This rotation may be performed when the spar cap 74 is positioned on the blade mould 500. This way, the spar cap 74 may be adapted to the pre-bend of the wind turbine blade 7 when the spar cap is arranged on blade mould 500.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims. If reference signs related to drawings are placed in parentheses in a claim, they are solely for attempting to increase the intelligibility of the claim, and shall not be construed as limiting the scope of the claim.

## Claims

1. A tool (100) for positioning a spar cap (74) in a blade mould (500), wherein the tool comprises:
- a structure (200) comprising:
- a central portion (210);
- a first support (220) and a second support (230) configured to be positioned at respectively both sides of the spar cap with respect to a lengthwise direction;
wherein the central portion is arranged between the first support and the second support;
- a connector (300) arranged at the central portion, wherein the connector is configured to be releasably attached to a surface (78) of the spar cap;
**characterized in that** the tool comprises
a reference arm (400) configured to engage a first spar cap reference (75) for positioning the connector relative to the surface of the spar cap.

2. The tool according to claim 1, wherein the first support (220) and the second support (230) comprise a coupling portion (240, 250) configured to engage corresponding guiding members (260, 270) arranged at a trailing edge side and a leading edge side of the blade mould (500).

3. The tool according to claim 2, wherein one of the coupling portion (240, 250) and the corresponding guiding member (260, 270) comprises a funnel and the other one comprises a spherical center pin to be received by the funnel.

4. The tool according to any of claims 2 - 3, wherein the coupling portion (240, 250) comprises a funnel and the corresponding guiding member (260, 270) comprises a spherical center pin.

5. The tool according to any of claims 2 - 4, wherein the first support (220) and the second support (230) comprise an upper bar (221, 231) and a lower bar (222, 232) telescopically connected to each other, wherein the lower bar (222, 232) is connected to the coupling portion (240, 250).

6. The tool according to any of claims 1 - 5, wherein the connector (300) comprises:
- one or more vacuum cups (311) for releasably attaching the spar cap (74);
- a bracket (320) for holding the one or more vacuum cups (311).

7. The tool according to any of claims 1 - 6, wherein the first spar cap reference (75) comprises an anchor disc of a lightning protection system.

8. The tool according to any of claims 1 - 7, wherein the connector (300) comprises a reference mark (330) to be aligned with a second spar cap reference (77).

9. The tool according to any of claims 1 - 8, wherein the reference arm (400) protrudes from the central portion (210) in a direction substantially parallel to the lengthwise direction, in such a way that the connector (300) is positioned in a predetermined distance from the first spar cap reference (75) in the lengthwise direction when the connector is attached to the spar cap.

10. The tool according to any of claims 1 - 9, wherein the reference arm (400) comprises a distal end (410) configured to be inserted in a hole of the first spar cap reference (75).

11. A method (600) for positioning a spar cap (74) in a blade mould (500) using a tool (100) for positioning a spar cap in a blade mould, wherein the method comprises:
- moving (610) the tool towards the spar cap to position a first support (220) and a second support (230) of the tool at respectively both sides of the spar cap;
- engaging (620) a reference arm (400) of the tool and a first spar cap reference (75);
- releasably (630) attaching a connector (300) of the tool to a surface of the spar cap;
- moving (640) the tool towards the blade mould (500) to position the first support and the second support at each side of the blade mould;
- de-attaching (650) the spar (74) from the connector (300) to arrange the spar cap in the blade mould.

12. The method (600) according to claim 11, wherein the first support (220) and the second support (230) comprise a coupling portion (240, 250) configured to engage corresponding guiding members arranged at a trailing edge side and a leading edge side of the blade mould, the method comprising engaging the coupling portion of first support and the second support with the corresponding guiding members.

13. The method (600) according to any of claims 11 - 12, wherein the spar cap (74) is positioned in a storage trolley when the tool is moving towards the spar cap.

14. The method (600) according to any of claims 11 - 13, wherein the reference arm (400) is engaged with the first spar cap reference when the tool moves towards the blade mould.

15. The method (600) according to any of claims 11 - 14, wherein the connector (300) comprises a reference mark (330) to be aligned with a second spar cap reference (77), the method comprising aligning the reference mark with the second spar cap reference.

## Patentansprüche

1. Werkzeug (100) zum Positionieren einer Rotorblattgurte (74) in einer Blattform (500), wobei das Werkzeug umfasst:
- eine Struktur (200), die umfasst:
- einen mittleren Abschnitt (210);
- eine erste Stütze (220) und eine zweite Stütze (230), die so konfiguriert sind, dass sie jeweils auf beiden Seiten der Rotorblattgurte in Längsrichtung positioniert werden können;
wobei den mittleren Abschnitt zwischen der ersten Stütze und der zweiten Stütze angeordnet ist;
- ein Verbindungselement (300), das am mittleren Abschnitt angeordnet ist, wobei das Verbindungselement so konfiguriert ist, dass es lösbar an einer Oberfläche (78) der Rotorblattgurte befestigt werden kann, **dadurch gekennzeichnet, dass** das Werkzeug umfasst:
- einen Referenzarm (400), der so konfiguriert ist, dass er mit einer ersten Rotorblattgurtenreferenz (75) in Eingriff kommt, um das Verbindungselement relativ zur Oberfläche der Rotorblattgurte zu positionieren.

2. Werkzeug gemäß Anspruch 1, wobei die erste Stütze (220) und die zweite Stütze (230) einen Kupplungsabschnitt (240, 250) umfassen, der so konfiguriert ist, dass er in entsprechende Führungselemente (260, 270) eingreift, die an einer Hinterkantenseite und einer Vorderkantenseite der Blattform (500) angeordnet sind.

3. Werkzeug nach Anspruch 2, wobei entweder der Kupplungsabschnitt (240, 250) oder das entsprechende Führungselement (260, 270) einen Trichter umfasst und das andere einen kugelförmigen Mittelstift umfasst, der von dem Trichter aufgenommen wird.

4. Werkzeug nach einem der Ansprüche 2 bis 3, wobei der Kupplungsabschnitt (240, 250) einen Trichter umfasst und das entsprechende Führungselement (260, 270) einen kugelförmigen Mittelstift umfasst.

5. Werkzeug nach einem der Ansprüche 2 bis 4, wobei die erste Stütze (220) und die zweite Stütze (230) eine obere Stange (221, 231) und eine untere Stange (222, 232) umfassen, die teleskopisch miteinander verbunden sind, wobei die untere Stange (222, 232) mit dem Kupplungsabschnitt (240, 250) verbunden ist.

6. Werkzeug nach einem der Ansprüche 1 bis 5, wobei das Verbindungselement (300) umfasst:
- eine oder mehrere Vakuumsauger (311) zum lösbaren Befestigen der Rotorblattgurte (74);
- eine Halterung (320) zum Halten der einen oder mehreren Vakuumsauger (311).

7. Werkzeug nach einem der Ansprüche 1 bis 6, wobei die erste Rotorblattgurtenreferenz (75) eine Ankerscheibe eines Blitzschutzsystems umfasst.

8. Werkzeug nach einem der Ansprüche 1 bis 7, wobei das Verbindungslement (300) eine Referenzmarkierung (330) umfasst, die mit einer zweiten Rotorblattgurtenreferenz (77) ausgerichtet werden soll.

9. Werkzeug nach einem der Ansprüche 1 bis 8, wobei der Referenzarm (400) aus dem mittleren Abschnitt (210) in einer Richtung herausragt, die im Wesentlichen parallel zur Längsrichtung verläuft, sodass das Verbindungselement (300) in einem vorbestimmten Abstand von der ersten Rotorblattgurtenreferenz (75) in Längsrichtung positioniert ist, wenn ddas Verbindungselement an der Rotorblattgurte befestigt ist.

10. Werkzeug nach einem der Ansprüche 1 bis 9, wobei der Referenzarm (400) ein distales Ende (410) aufweist, das so konfiguriert ist, dass es in ein Loch der ersten Rotorblattgurtenreferenz (75) eingeführt werden kann.

11. Verfahren (600) zum Positionieren einer Rotorblattgurte (74) in einer Blattform (500) unter Verwendung eines Werkzeugs (100) zum Positionieren einer Rotorblattgurte in einer Blattform, wobei das Verfahren umfasst:
- Bewegen (610) des Werkzeugs in Richtung der Rotorblattgurte, um eine erste Stütze (220) und eine zweite Stütze (230) des Werkzeugs jeweils auf beiden Seiten der Rotorblattgurte zu positionieren;
- Eingreifen (620) eines Referenzarms (400) des Werkzeugs und einer ersten Rotorblattgurtenreferenz (75);
- lösbares (630) Anbringen eines Verbindungsstücks (300) des Werkzeugs an einer Oberfläche der Rotorblattgurte;
- Bewegen (640) des Werkzeugs in Richtung der Blattform (500), um die erste Stütze und die zweite Stütze an jeder Seite der Blattform zu positionieren;
- Lösen (650) der Rotorblattgurte von dem Verbindungselement (300), um die Rotorblattgurte in der Blattform anzuordnen.

12. Verfahren (600) nach Anspruch 11, wobei die erste Stütze (220) und die zweite Stütze (230) einen Kupplungsabschnitt (240, 250) umfassen, der so konfiguriert ist, dass er in entsprechende Führungselemente eingreift, die an einer Hinterkantenseite und einer Vorderkantenseite der Blattform angeordnet sind, wobei das Verfahren das Eingreifen des Kupplungsabschnitts der ersten Stütze und der zweiten Stütze in die entsprechenden Führungselemente umfasst.

13. Verfahren (600) nach einem der Ansprüche 11 bis 12, wobei die Rotorblattgurte (74) in einem Lagerwagen positioniert ist, wenn sich das Werkzeug auf die Rotorblattgurte zubewegt.

14. Verfahren (600) nach einem der Ansprüche 11 bis 13, wobei der Referenzarm us (400) mit der ersten Rotorblattgurtenreferenz in Eingriff gebracht wird, wenn sich das Werkzeug in Richtung der Blattform bewegt.

15. Verfahren (600) gemäß einem der Ansprüche 11 bis 14, wobei das Verbindungslement (300) eine Referenzmarkierung (330) umfasst, die mit einer zweiten Rotorblattgurtenreferenz (77) ausgerichtet werden soll, wobei das Verfahren das Ausrichten der Referenzmarkierung mit der zweiten Rotorblattgurtenreferenz umfasst.

## Revendications

1. Outil (100) pour positionner une semelle de longeron (74) dans un moule de pale (500), dans lequel l'outil comprend :
- une structure (200) comprenant :
- une partie centrale (210) ;
- un premier support (220) et un deuxième support (230) configurés pour être positionnés respectivement des deux côtés de la semelle de longeron par rapport à une direction longitudinale ;
dans lequel la partie centrale est disposée entre le premier support et le deuxième support ;
- un connecteur (300) disposé au niveau de la partie centrale, dans lequel le connecteur est configuré pour être fixé de manière amovible à une surface (78) de la semelle de longeron **caractérisé en ce que** l'outil comprend :
- un bras de référence (400) configuré pour s'engager avec une première référence de semelle de longeron (75) afin de positionner le connecteur par rapport à la surface de la semelle de longeron.

2. L'outil selon la revendication 1, dans lequel le premier support (220) et le deuxième support (230) comprennent une partie d'accouplement (240, 250) configurée pour s'engager avec des éléments de guidage correspondants (260, 270) disposés sur un côté de bord de fuite et un côté de bord d'attaque du moule de pale (500).

3. L'outil selon la revendication 2, dans lequel l'un parmi la partie d'accouplement (240, 250) et l'élément de guidage correspondant (260, 270) comprend un entonnoir et l'autre comprend une broche centrale sphérique destinée à être reçue par l'entonnoir.

4. L'outil selon l'une quelconque des revendications 2 à 3, dans lequel la partie d'accouplement (240, 250) comprend un entonnoir et l'élément de guidage correspondant (260, 270) comprend une broche centrale sphérique.

5. L'outil selon l'une quelconque des revendications 2 à 4, dans lequel le premier support (220) et le deuxième support (230) comprennent une barre supérieure (221, 231) et une barre inférieure (222, 232) reliées de manière télescopique l'une à l'autre, dans lequel la barre inférieure (222, 232) est reliée à la partie d'accouplement (240, 250).

6. L'outil selon l'une quelconque des revendications 1 à 5, dans lequel le connecteur (300) comprend :
- une ou plusieurs ventouses (311) pour fixer de manière amovible le capuchon de longeron (74) ;
- un support (320) pour maintenir la ou les ventouses (311).

7. L'outil selon l'une quelconque des revendications 1 à 6, dans lequel la première référence de la semelle de longeron (75) comprend un disque d'ancrage d'un système de protection contre la foudre.

8. L'outil selon l'une quelconque des revendications 1 à 7, dans lequel le connecteur (300) comprend une marque de référence (330) à aligner avec une deuxième référence de semelle de longeron (77).

9. L'outil selon l'une quelconque des revendications 1 à 8, dans lequel le bras de référence (400) fait saillie à partir de la partie centrale (210) dans une direction sensiblement parallèle à la direction longitudinale, de telle sorte que le connecteur (300) soit positionné à une distance prédéterminée de la première référence de semelle de longeron (75) dans la direction longitudinale lorsque le connecteur est fixé à la semelle de longeron.

10. Outil selon l'une quelconque des revendications 1 à 9, dans lequel le bras de référence (400) comprend une extrémité distale (410) configurée pour être insérée dans un trou de la première référence de semelle de longeron (75).

11. Procédé (600) pour positionner une semelle de longeron (74) dans un moule de pale (500) à l'aide d'un outil (100) pour positionner une semelle de longeron dans un moule de pale, dans lequel le procédé comprend :
- déplacer (610) l'outil vers la semelle de longeron afin de positionner un premier support (220) et un deuxième support (230) de l'outil respectivement des deux côtés de la semelle de longeron ;
- l'engagement (620) d'un bras de référence (400) de l'outil et d'une première référence de semelle de longeron (75) ;
- fixer de manière amovible (630) un connecteur (300) de l'outil à une surface de la semelle de longeron ;
- déplacer (640) l'outil vers le moule de pale (500) afin de positionner le premier support et le deuxième support de chaque côté du moule de pale ;
- détacher (650) le longeron (74) du connecteur (300) pour disposer la semelle de longeron dans le moule de pale.

12. Procédé (600) selon la revendication 11, dans lequel le premier support (220) et le deuxième support (230) comprennent une partie d'accouplement (240, 250) configurée pour s'engager avec des éléments de guidage correspondants disposés sur un côté de bord de fuite et un côté de bord d'attaque du moule de pale, le procédé comprenant l'engagement de la partie d'accouplement du premier support et du deuxième support avec les éléments de guidage correspondants.

13. Procédé (600) selon l'une quelconque des revendications 11 à 12, dans lequel la semelle de longeron (74) est positionné dans un chariot de stockage lorsque l'outil se déplace vers la semelle de longeron.

14. Procédé (600) selon l'une quelconque des revendications 11 à 13, dans lequel le bras de référence (400) est engagé avec la première référence de semelle de longeron lorsque l'outil se déplace vers le moule de pale.

15. Procédé (600) selon l'une quelconque des revendications 11 à 14, dans lequel le connecteur (300) comprend une marque de référence (330) à aligner avec une deuxième référence de semelle de longeron (77), le procédé comprenant l'alignement de la marque de référence avec la deuxième référence de semelle de longeron.
